Europäisches Patentamt

(19) European Patent Office

Office européen des brevets

(11) Publication number : **0 515 290 A1**

(12) **EUROPEAN PATENT APPLICATION**

(21) Application number : **92420135.3**

(22) Date of filing : **22.04.92**

(51) Int. Cl.⁵ : **G06F 11/26**

(30) Priority : **24.04.91 FR 9105430**

(43) Date of publication of application :
**25.11.92 Bulletin 92/48**

(84) Designated Contracting States :
**DE FR GB**

(71) Applicant : **Hewlett-Packard Company
3000 Hanover Street
Palo Alto, California 94304 (US)**

(72) Inventor : **Sauvage, Pierre
158, Cité de Navarre
F-38560 Champ sur Drac (FR)**

(74) Representative : **de Beaumont, Michel
1bis, rue Champollion
F-38000 Grenoble (FR)**

(54) **A method and a device for testing a computer system board.**

(57)  The present invention relates to a testing method for an intermediate circuit between a microprocesor and surrounding circuits comprising a first set of access routes including lines of a data bus (D) and a control bus (C), and a second set of access paths comprising lines (AH) connected to other lines (CS) through a processing circuit (40). This method consists in providing in the intermediate circuit a test register (46) addressable by addresses ignored by the other elements of the circuit ; writing test words in the test register through either one of the first and second set of access paths ; reading the written words in the test register through the other set of access paths ; and checking whether the read words correspond in a predetermined way to the test words.

Fig. 5A

EP 0 515 290 A1

Jouve, 18, rue Saint-Denis, 75001 PARIS

## BACKGROUND OF THE INVENTION

The present invention relates to computer systems and in particular to the verification of correct information transfers between certain of the circuits of the system and surrounding circuits.

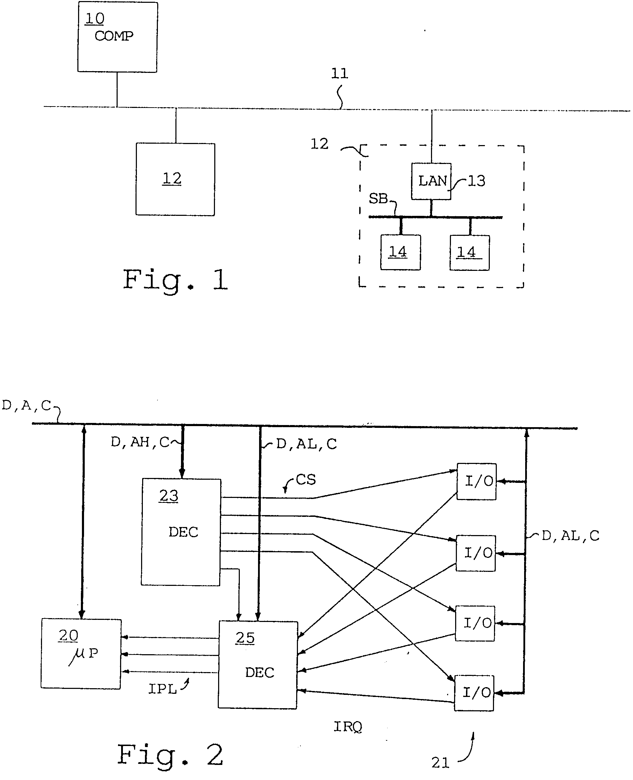

Figure 1 partially shows a conventional computer system. This system comprises a computer 10 associated to a network 11 to which are connected various elements, especially servers 12. A server generally comprises an interface board 13 between the network 11 and a system bus SB to which are connected input/output boards 14. The input/output boards 14 are, for example, connected to terminals, to a telephone network, to peripheric devices...

All of the boards of the server 12 are generally managed by the interface board 13. Each of the server boards comprises a microprocessor managing the board itself and allowing it to achieve various operations, especially testing itself and communicating the test results to the computer system.

Figure 2 shows a simplified schematic diagram of a board 14 which is here an input/output board. This board comprises a microprocessor 20 connected to a system bus D,A,C, internal to the board, comprising a data bus D, an address bus A and a control bus C. The data bus comprises, for example, 16 lines for transmitting 16 bit words. The address bus comprises, for example, 24 lines for communicating 24 bit addresses. The control bus comprises at least three lines which are a clock line (CK), a read/write line (R/W), and a data reception acknowledgement line (DTACK). In the following description, it will only be referred to line R/W, the functions of the other lines not being necessary for understanding the invention. Line R/W allows, as it will be seen later, the microprocessor to establish a reading mode (R) or a writing mode (W).

Peripheric devices, not represented, are connected to input/output (I/O) circuits 21. Each I/O circuit can manage a plurality of peripheric devices, for example 8. Each I/O circuit comprises an input connected to a chip-select line CS and an output connected to an interruption request line IRQ. The CS lines are connected to outputs of an address decoder circuit 23 connected to a plurality of the address bus lines, corresponding to high address lines AH. The IRQ lines are connected to inputs of an interruption priority level decoder circuit 25 which provides the microprocessor 20 with a binary coded priority level through lines IPL, for example three lines.

For a normal operation, circuit 23 is only connected to the address bus and circuit 25 is not connected to any bus. But, generally the decoding functions of decoder circuits 23 and 25 are programmable. Therefore, the address decoder circuit 23 is also connected to the data bus and the decoder circuit 25 is connected to low address lines AL, to chip-select line CS of circuit 23 and to the data bus.

Each of the I/O circuits is also connected to a certain amount of the data bus lines, for example 8, for transmitting 8 bit words between the board and the peripheric device, and to low address lines AL.

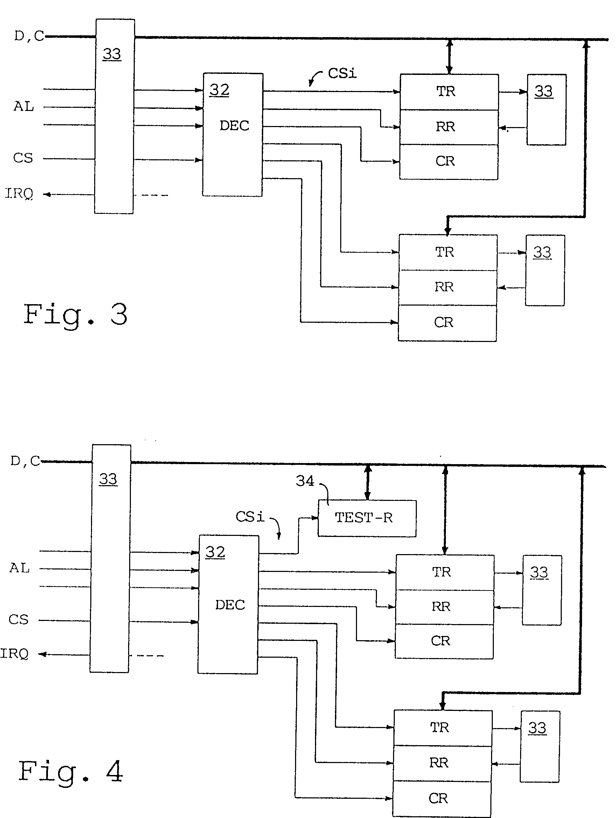

Figure 3 partially represents internal circuitry of an input/output circuit 21. This input/output circuit is intended to communicate with two non-represented peripheric devices. To each peripheric device are associated three registers, that is, a data transmission register TR, a data reception register RR and a control register CR. Each of the registers is also connected to the control bus C, to the data bus D and to an internal chip-select line CSi allowing an internal address decoder 32 to select the register. Address decoder 32 is connected to the CS line of circuit 21 and to at least three low address lines in order to be able to select the six registers. All the inputs and outputs of the circuit are buffered by buffers 33.

In register TR are written words to be transmitted to the peripheric device; the peripheric device writes words which are to be transferred to the data bus in register RR; and in register CR, is written control information which determines a communication protocol, i.e. how it must be communicated with the peripheric device, such as the communication speed, the number of bits per word, the parity of the words... Registers CR are connected to internal circuitry not represented which exploit the data of these registers for managing the communication.

In order to read or write in one of the registers of circuit 21, the operations achieved are the following:

- setting by the microprocessor the R/W line of the control bus to a logic state, for example "1" to read and "0" to write;
- issuing by the microprocessor an address on the address bus for selecting the desired register;
- decoding the high address AH by the decoder circuit 23 which accordingly selects a circuit 21 by setting the associated CS line to an active state, for example "0";
- decoding the low address AL by decoder 32 of the selected circuit 21, this decoder selecting the desired register through the associated chip-select line CSi, whereby the selected register will write its contents on the data bus if the R/W line is at "0", or will read a word provided by the microprocessor on the data bus if the R/W is at "1".

When a peripheric device wishes to communicate with the system, the associated circuit 21 forces its output IRQ to an active state, for example "0", which corresponds to an interruption request. The circuitry establishing this interruption request is not described. Decoder circuit 25 converts this request into a priority level IPL as a function of the priority attributed to the concerned circuit 21. According to the priority level, the microprocessor interrupts or not its operations. When the microprocessor interrupts its operations, it searches for the circuit 21 having requested the interruption by sequentially selecting in read mode (line R/W at "1") the registers RR of circuits 21. The register RR of circuit 21 having requested the interruption writes its contents on the data bus when it is selected and output IRQ of the concerned circuit 21 is then reinitialized.

Common failures of a board are due to bad access paths between various circuits of a board. An access path is defined as comprising a conductive track on the board, the soldered connection of the track to a pin of a circuit, the connection of the pin to a buffer of the circuit chip, the connection of the buffer to metallizations of the chip, and eventually connections through various internal circuits of the chip. Defects in the access paths can result, for example, from a bad soldering of the pins to their tracks, from the destruction of a buffer, from a bad quality of the silicon of the chip...

In order to detect some of these defects, the microprocessor periodically executes, for example at power-on, a board test program. One of the test consists in verifying the communication of the board with the peripheric devices. Therefore, the communication between the microprocessor and the input/output circuits is generally tested. If this test is successful and if the peripheric device misfunctions, it means that the defect is localized in the communication between the input/output circuit and this peripheric device, or in the peripheric device.

A conventional test consists in checking the connection of the input/output circuit to the data bus, this connection being a common failure source. Register RR is generally read-only, i.e. it cannot be written in it through the data bus. In register CR, some bits are read-only and the writing in the others of inadequate information can result in an undesirable functioning of the peripheric device. Register TR can be read or written from the data bus and it is in the register that test words are written because it happens to be the most convenient. The written words are then read and compared to the test words whereby it can be determined whether the access paths between the register and the data bus are defect.

However, only words corresponding to data which are ignored by the associated peripheric device can be written in register TR because it is wished to not operate the peripheric device in an uncontrolled manner. Thus, the set of words that can be written in the register is limited and the failure possibilities of all the access paths cannot be exhaustively tested. Moreover, the set of words that can be written in the register depends on the type of peripheric device connected to the register, hence one specific test program per type of peripheric device must be provided.

Only testing the input/output circuits does not always allow to localize a failure. Indeed, if the test program indicates a failure, this failure can be due to a bad connection to the data bus, but also, for example, to a failure of the address decoder circuit not sending a chip-select.

Testing methods for intermediate circuits in order to better localize failures exist. They consist in simulating peripheric device accesses and the actions of the peripheric devices. Therefore, the previously mentioned transmission and reception registers TR, RR, of the input/output circuits are of a special type. They can be put in a test mode during which their connections to the peripheric devices are interrupted and registers TR are connected to the associated registers RR. The words written in a register TR are then transferred to associated register RR where they can be read, which allows to check whether data, even erroneous, effectively reaches register TR and at the same time if this data generates an interruption request when reaching register RR.

However, for a reliable verification of the intermediate circuits, an at least partial correct functioning of the input/output circuits is needed. For example, if all the lines of the data bus arriving to the input/output circuit are interrupted, this circuit also reacts as if it not selected. In any case, if the input/output circuit does not generate an interrupt request, it will not be known if it is the input/output circuit that is defect or if it is the priority level decoder circuit... Thus, in spite of this test method with special registers TR and RR, one cannot, in many cases, accurately localize a failure.

SUMMARY OF THE INVENTION

An object of the invention is to test a microprocessor board by accurately localizing eventual failures.

Another object of the invention is to independently test an address decoder circuit.

Another object of the invention is to independently test an interruption priority level decoder circuit.

These objects are achieved by a testing method for intermediate circuit between a microprocessor and surrounding circuits comprising a first set of access paths including lines of a data bus and a control bus, and a second set of access paths including lines connected to other lines through a processing circuit, comprising the steps of: providing in the intermediate circuit a test register addressable by addresses which are ignored by other elements of the intermediate circuit; writing test words in the test register through either one of the first and second sets of access paths; reading the written words in the test register through the other set of access paths; and checking whether the read words correspond in a predetermined way to the test words.

The invention more particularly relates to a method for testing a computer system board comprising a microprocessor connected through data, address and control buses to input/output circuits and to intermediate circuits between the microprocesor and the input/output circuits, comprising the step of: providing a test register connected to the data and control buses in the input/output circuits, each test register being addressable by addresses ignored by the other elements in the input/output circuit; testing the correct functioning of at least one of the intermediate circuits; testing the connection to the data bus of each input/output circuit by writing test words in the test register of the input/output circuit, by reading the written words and by comparing the read words to the test words.

According to an embodiment of the invention, the tested intermediate circuit is an address decoder circuit, wherein the second set of access paths includes lines of an address bus, a decoder and selection lines, said address decoder circuit being tested according to the following steps: issuing an address on the lines of the address bus causing the states of a combination of selection lines to be changed, the states of the selection lines being written in the test register of the circuit; addressing the test register and reading its contents through the data bus; and comparing the read word to a word corresponding to the expected states of the selection lines).

According to an embodiment of the invention, the intermediate circuit is a interruption priority level decoder circuit connected to the microprocessor through priority level lines and receiving interruption request signal on interruption request lines, this circuit being tested according to the following steps: addressing the test register of the decoder circuit and writing therein a test word issued on the data bus, this test word being transferred to the priority level lines inside the circuit; and analyzing the priority level at the output of the decoder circuit and comparing it to information corresponding to the test word.

According to an embodiment of the invention, the test register of the priority level decoder circuit includes two portions, a first portion being connected to the priority level lines and the second portion being connected to the interruption request lines, the circuit being tested according to the following additional steps: addressing the test register and writing in its second portion a test word, the bits of which are all at the same state except one, issued on the data bus, this test word being transferred to the interrupt request lines; and analyzing the priority level at the output of the decoder circuit and comparing it to an expected level corresponding to the test word.

According to an embodiment of the invention, each of the input/output circuits is tested according to the following steps: addressing the test register of the input/output circuit and writing therein a test word issued on the data bus; addressing the test register and reading its contents through the data bus; and comparing the word then present on the data bus to the test word.

The invention also provides a computer system in which is carried out the method according to the invention, comprising: a microprocessor connected to data, address and control buses; input/output circuits comprising at least a first register coupled to the data, address and control buses and to a peripheric device; intermediate circuits between the microprocessor and the input/output circuits, coupled to the data, address and control buses. Each input/output circuit comprises an additional register coupled only to the data, address and control buses, and addressable by an address ignored by said at least first register, and wherein at least one of the intermediate circuits comprises a test register coupled to the data, address and control buses, and the outputs and inputs of which are respectively connected to inputs and outputs of the intermediate circuit.

According to an embodiment of the invention, one of said intermediate circuits is an address decoder circuit comprising selection outputs and in which the outputs of its test register are connected to the data bus and the inputs of its test register are connected to the selection outputs.

According to an embodiment of the invention, one of said intermediate circuits is an interruption priority level decoder circuit comprising interruption request inputs and priority level outputs and in which the outputs of its test register are connected to the data bus and the outputs of its test register are connected, on the one hand to the interruption level outputs through first gates and, on the other hand, to the interruption request inputs through second logic gates.

## BRIEF DESCRIPTION OF THE DRAWINGS

The foregoing and other objects, features and advantages of the invention will be described in more detail in the following description of preferred embodiments and by referring to the accompanying drawings among which:

Figures 1, 2 and 3, previously described, respectively represent a conventional network computer system, a computer system board and a circuit of the board;

Figure 4 represents an embodiment according to the invention of an input/output circuit;

Figures 5A and 5B respectively represent an embodiment according to the invention of a address decoder circuit and an embodiment of an associated test register; and

Figure 6 represents an embodiment according to the invention of an interruption priority level decoder circuit.

## DESCRIPTION OF PREFERRED EMBODIMENTS

The present invention enables to test a microprocessor board and to localize the eventual failures by first individually testing each of the intermediate circuits and then the input/output circuits. In the following description it will successively be described how the input/output circuits, an address decoder circuit and an interruption priority level decoder circuit are tested.

An input/output circuit 21 according to the invention, shown in Figure 4, comprises the same elements as the circuit of Figure 3, designated by the same references as well as an additional test register 32 connected to the data bus and to an internal chip-select line CSi. The decoding function of the internal address decoder 32 has been modified in order to be able to select the additional register 34. In the example of Figure 4, the three low address lines AL provided in the conventional circuit of Figure 3 are sufficient for also addressing the additional register 34. Indeed, in order to address 6 existing registers, at least three address lines were necessary, which allows eight combinations of which six were only used. Hence, with the additional test register 34, seven combinations will be used and it is not necessary to increase the number of address lines reaching the input/output circuit. Generally, in most of the existing input/output circuits, the number of registers that must be addressed is smaller than the possible binary combinations of the address lines reaching the circuit.

During a test phase of the connection of circuit 21 to the data bus D, the invention provides the steps of:
- establishing the write mode, selecting register 34 and presenting a test word on the data bus D;
- establishing the read mode, selecting register 34 and reading the word then present on the data bus D.

The test words are written and read through tested access paths comprising the connection of the data bus D to circuit 21, buffer 33 and the connection of buffer 33 to the internal data bus of circuit 21.

If it is supposed that the absence of a signal on the data bus lines is interpreted as a 0 level by the circuits which receive these lines, some of the comparison results can, for example, be interpreted in the following way. If the test word comprises one bit at "1" and if this bit is at "0" on the word that is read, the access path corresponding to this bit is interrupted. If, in the same case, the read word comprises several bits at "1", the access paths corresponding to these bits at "1" are shorted.

It is also possible to detect inductive couplings between lines of the data bus by trying test words comprising an important number of bits at "1". Indeed, an important number of bits at "1" could, by inductive coupling and during a brief time interval but long enough for erroneous values to be stored in the register, force to "1" the low number of bits normally at "0".

By using test words with an important number of bits at "1", a sufficient decoupling of the power supply lines can also be tested. Indeed, when an important number of bits switches from "0" to "1", a current surge is generated due to the charging of parasitic capacities. If the supply line having to supply this current surge is insufficiently decoupled, its voltage drops abruptly during the surge and this bits which must be set at "1" can remain at "0" during this surge which is generally long enough for erroneous data to be stored in the register.

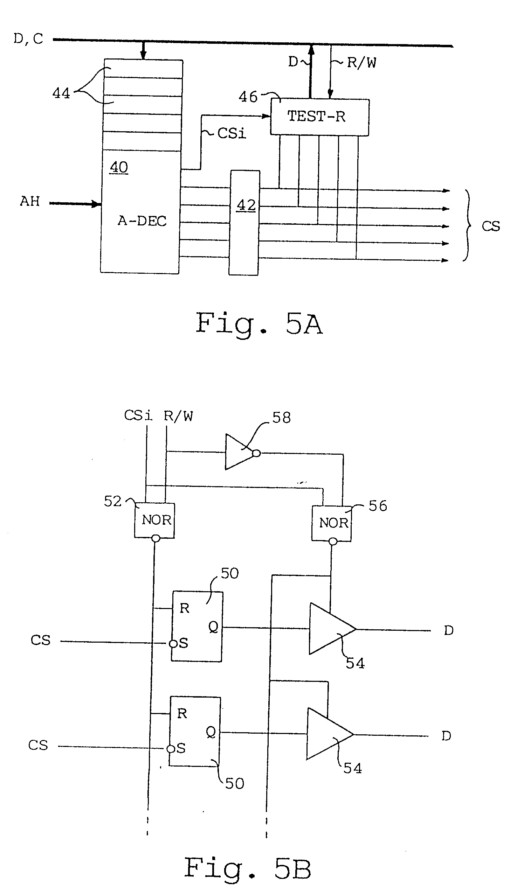

Figure 5A shows an embodiment of the invention applied to an address decoder circuit 23, such as that shown in Figure 2. Decoder circuit 23 comprises a programmable decoder 40 connected to the high address lines AH and to the chip-select lines CS through a buffer 42. In order to program the decoding functions, a programmable decoder 40 is connected to one programming register 44 per CS line. Registers 44 are connected to the data and control buses and are selectable by non-represented selection lines which can controlled by programmable decoder 40. The use of these registers is conventional and will not be described.

According to the invention, decoder circuit 23 comprises an additional test register 46 connected to the data bus, to the R/W line of the control bus and to each of the CS lines at the output of buffer 42. Decoder 40 has been modified to be able to select the additional register 46 with an additional internal chip-select line CSi. It is not needed to increase the number of address lines reaching decoder 40 in order to select the additional register 46 because this number is great (for example 15) and sufficient to control many more than the existing CS lines.

Figure 5B shows elements of register 46 associated to two CS lines. Each CS line is connected to a set input S of an RS flip-flop 50. Set input S is active low, i.e. the active state "0" of line CS sets flip-flop 50 to "1". The reset inputs R of all flip-flops 50 are connected to the output of a NOR gate 52, to the inputs of which are connected the R/W line and the internal chip-select line CSi. Each output Q of a flip-flop 50 is connected to a respective line of the data bus D through a tri-state buffer 54. All tri-state buffers 54 are controlled by a NOR gate 56, a first input of which is connected to line CSi and a second input of which is connected to line R/W through an inverter 58. Thus, in write mode (R/W at "0") and when register 46 is selected (CSi at "0"), flip-flops 50 are reset. In read mode (R/W at "1") and when register 46 is selected, the tri-state buffers 54 are active and the contents of flip-flops 50 are transferred to the data bus. The steps of this test phase are the following:

During a test phase, the functioning of decoder 40 and of buffer 42 are checked in particular. The steps of this test phase are the following:
- establishing the write mode and presenting on the address bus an address selecting register 46, whereby flip-flops 50 are reset;
- issuing an address activating (setting to 0) a CS line, whereby a "1" is written in the corresponding flip-flop 50;

- establishing the read mode and issuing an address again selecting register 46, whereby the contents of flip-flops 50 are transferred to the data bus; and

- comparing the word then present on the data bus to an expected word.

During its normal operation, decoder 40 can only activate one CS line at a time. During the test phase, the functions of decoder 40 will be reprogrammed so that all the possible combinations of the states of the CS lines can be tried. Thus, it will be possible to deduce from the test results the failures that have previously been described for the input/output circuit tests.

During the test phase, when the CS lines are activated, data will preferably not be presented on the data bus in order to avoid actions of peripheric devices. Therefore, R/W line will be set to "1" (read mode).

To enhance this test, an additional register can be added to test the connection to the data bus as it is done for the input/output circuits.

Thus, an address decoder circuit can be individually tested and many failures localized in this circuit can be detected.

It will be noted that the connections of the CS outputs to the surrounding circuits are not tested. However, if these connections have defects, by carrying out the above test phase, it will be known that these connections or that peripheric devices are defect if peripheric devices concerned by these connections do not respond to an activation.

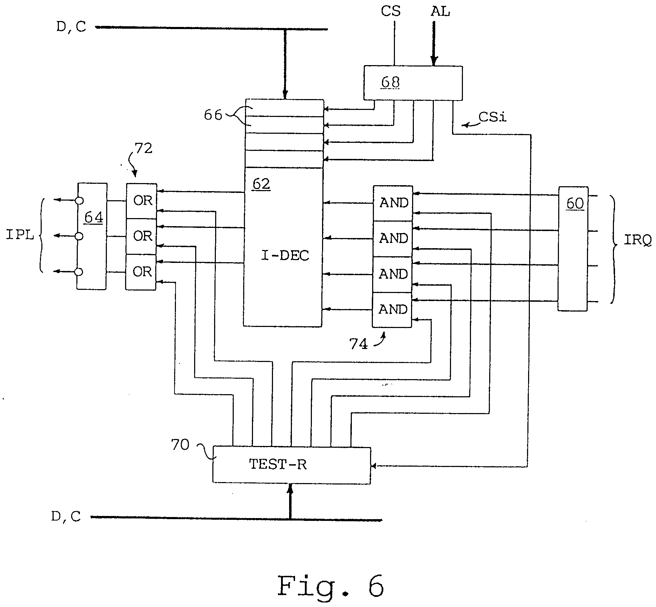

Figure 6 represents an embodiment of the invention applied to an interruption priority level decoder circuit 25 such as that of Figure 2. Circuit 25 comprises interrupt request lines IRQ connected to an input buffer 60, the outputs of which are connected to a decoder 62. The outputs of decoder 62 are connected to an output inverting buffer 64 which provided on the previously mentioned output lines IPL and interruption priority level coded in inverted binary with a certain number of bits, here 3 corresponding to priority levels between 0 and 7.

Decoder 62 is programmable and is connected to one programming register 66 per IRQ line. Registers 66 are also connected to the data and control buses. An address decoder 68 connected to the low address lines AL previously mentioned and to the CS line of circuit 25 enables the selection of each of the registers 66 through internal chip-select lines CSi. The use of these registers is conventional and will not be described.

According to the invention, decoder circuit 25 comprises an additional test register 70 connected to the data and control buses D, C. Register 70 comprises a first set of latches, the outputs of which are connected to the IPL lines at the input of buffer 64 through OR gates 72, and a second set of latches, the output of which are connected to the IRQ lines at the output of buffer 60 through AND gates 74. Register 70 is such that the words that are written therein are directly presented at the outputs of the register. The address decoder 68 is modified in order to enable the selection of register 70 through an additional internal chip-select line CSi. The address lines AL reaching the decoder 68 are, in most cases, sufficient for selecting the additional register 70.

The register is used during two test phases, a first for testing the connection of lines IPL and a second for testing the correct functioning of decoder 62. In fact, it would be convenient during the second test phase to also test the correct functioning of input buffer 60. Therefore, it would be necessary to place the AND gates 74 at the input of buffer 60, however this is not possible in the present technologies. Of course, if it is possible, the AND gates 74 will be placed at the input of buffer 60.

It is supposed that, during these test phases, no peripheric device request an interruption, i.e. the IRQ lines all stay at "1" and the outputs of decoder 62 all stay at "0".

The first test phase consists in simulating the provision of priority levels by decoder 62. It is therefore proceeded as follows. Test words corresponding to priority levels are written in the first set of latches of register 70. These words will at the same time be present at the inputs of buffer 64 through OR-gates 72. It is checked whether the information then present on the IPL lines corresponds to the test word. It is proceeded in the same way for all the priority levels and, at the end of this first test phase, a "0" is written in the latches of the first set of latches.

The second test phase consists in simulating interrupt requests on lines IRQ. It is therefore proceeded as follows. Test words comprising only one bit at "0" (which corresponds to one interrupt request) are written in the second set of latches of register 70. These words are at the same time present on lines IRQ through AND-gates 74. It is checked whether the information then present at the IPL outputs is effectively a priority level corresponding to the test word. It is proceeded this way until an interrupt request has been simulated on all IRQ lines and, at the end of this second phase, a "1" is written in the latches of the second set of latches.

In the case represented in Figure 6, there are not enough IRQ lines to simulate all the possible priority levels. It is hence provided, during the second test phase, to reprogram decoder 62 through register 66 in order to affect the missing priority levels to lines IRQ.

The connection to the data bus of decoder circuit 25 can also be tested by providing an additional test register as for the input/output circuits.

it will be noted that the connections of lines IRQ to the surrounding circuits are not tested. However, if these connections are defect, by carrying out the two preceding test phases, one will know that these connections are defect if the computer system does not respond when the peripheral devices concerned by these connections are used.

The invention can be adapted with minor modifications to Application specific Integrated Circuits (ASIC's), the additional registers occupying little space and being connected to existing connections.

The invention has been described by referring to the testing of microprocessor boards, but it is also possible to independently test each of the circuits of the board, for example during their manufacturing.

Many alternatives and modifications of the present invention will appear to those skilled in the art, especially in what concerns the type and the use of the test registers.

**Claims**

1. A method for testing an intermediate circuit (23, 25) between a microprocessor (20) and surrounding circuits (21) comprising a first set of access paths including lines of a data bus (D) and a control bus (C), and a second set of access paths including lines (AH, IRQ) connected to other lines (CS, IPL) through a processing circuit (40, 62), comprising the steps of:
    - providing in the intermediate circuit a test register (46, 70) addressable by addresses which are ignored by other elements of the intermediate circuit;
    - writing test words in the test register through either one of the first and second sets of access paths;
    - reading the written words in the test register through the other set of access paths, and
    - checking whether the read words correspond in a predetermined way to the test words.

2. A method for testing a computer system board comprising a microprocessor (20) connected through data, address and control buses (D, A, C) to input/output circuits (21) and to intermediate circuits (23, 25) between the microprocessor and the input/output circuits, comprising the steps of:
    - providing a test register (34) connected to the data and control buses in the input/output circuits (21), each test register being addressable by addresses ignored by the other elements in the input/output circuit;
    - testing according to claim 1 the correct functioning of at least one of the intermediate circuits;
    - testing the connection to the data bus (D) of each input/output circuit (21) by writing test words in the test register of the input/output circuit, by reading the written words and by comparing the read words to the test words.

3. A method as claimed in claim 1, wherein the tested intermediate circuit is an address circuit (23), wherein the second set of access paths includes lines (AH) of an address bus, a decoder (40) and selection lines (CS), said address decoder circuit being tested according to the following steps:
    - issuing an address on the lines of the address bus causing the states of a combination of selection lines (CS) to be changed, the states of the selection lines being written in the test register (46) of the circuit;
    - addressing the test register and reading its contents through the data bus (D); and
    - comparing the read word to a word corresponding to the expected states of the selection lines (CS).

4. A method as claimed in claim 1, wherein the intermediate circuit is a interruption priority level decoder circuit (25) connected to the microprocessor through priority level lines (IPL) and receiving interruption request signals on interruption request lines (IRQ), this circuit being tested according to the following steps:
    - addressing the test register (70) of the decoder circuit (25) and writing therein a test word issued on the data bus, this test word being transferred to the priority level lines (IPL) inside the circuit; and
    - analyzing the priority level (IPL) at the output of the decoder circuit and comparing it to information corresponding to the test word.

5. A method as claimed in claim 4, wherein the test register (70) of the priority level decoder circuit includes two portions, a first portion being connected to the priority level lines (IPL) and the second portion being connected to the interruption request lines (IRQ), the circuit being tested according to the following additional steps:
    - addressing the test register (70) and writing in its second portion a test word, the bits of which are all at the same state except one, issued on the data bus (D), this test word being transferred to the interrupt request lines (IRQ); and
    - analyzing the priority level (IPL) at the output of the decoder circuit and comparing it to an expected level corresponding to the test word.

6. A method as claimed in claim 2, wherein each of the input/output circuits (21) is tested according to the following steps:
    - addressing the test register (34) of the input/output circuit (21) and writing therein a test word issued on the data bus;
- addressing the test register and reading its contents through the data bus; and
- comparing the word then present on the data bus to the test word.

7. Computer system in which is carried out the method according to claim 2, comprising:
- a microprocessor (20) connected to data, address and control buses (D, A, C);
- input/output circuits (21) comprising at least a first register coupled to the data, address and control buses (D, A, C) and to a peripheric device;
- intermediate circuits (23, 25) between the microprocessor and the input/output circuits, coupled to the data, address and control buses (D, A, C);
wherein each input/output circuit (21) comprises an additional register (34) coupled only to the data, address and control buses (D, A, C), and addressable by an address ignored by said at least first register, and wherein at least one of the intermediate circuits (23, 25) comprises a test register (46, 70) coupled to the data, address and control buses (D, A, C), and the outputs and inputs of which are respectively connected to inputs and outputs of the intermediate circuit.

8. A system as claimed in claim 7, wherein one of said intermediate circuits is an address decoder circuit (23) comprising selection outputs (CS) and in which the outputs of its test register (46) are connected to the data bus (D) and the inputs of its test register are connected to the selection outputs (CS).

9. A system as claimed in claim 7, wherein one of said intermediate circuits is an interruption priority level decoder circuit (25) comprising interruption request inputs (IRQ) and priority level outputs (IPL) and in which the outputs of its test register (70) are connected to the data bus (D) and the outputs of its test register are connected, on the one hand to the interruption level outputs (IPL) through first logic gates (72) and, on the other hand, to the interruption request inputs (IRQ) trough second logic gates (74).

## Fig. 1

## Fig. 2

**Fig. 3**

**Fig. 4**

Fig. 5A

Fig. 5B

Fig. 6

European Patent Office

# EUROPEAN SEARCH REPORT

Application Number

EP    92 42 0135

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | IBM TECHNICAL DISCLOSURE BULLETIN. vol. 30, no. 9, February 1988, NEW YORK US pages 187 - 188; 'Shadow diagnostic register for gate array circuit testing' * en entier * | 1,2,7 | G06F11/26 |
| A | PATENT ABSTRACTS OF JAPAN vol. 08, no. 223 (P-307)12 October 1984 & JP-A-59 105 109 ( MITSUBISHI DENKI KK ) 9 December 1982 * abstract * | 1,2,7 | |
| A | EP-A-0 169 244 (FUJITSU LTD) * page 9, line 16 - page 12, line 22; figures 2-5 * | 1,2,7 | |
| A | FR-A-2 290 708 (COMPAGNIE HONEYWELL BULL) * page 2, line 12 - page 5, line 2; figure 1 * | 1,2,7 | |
| A | TIETZE, U. SCHENK, C. 'Halbleiter-Schaltungstechnik' 1985 , SPRINGER-VERLAG , BERLIN * page 647, line 18 - page 649, line 2; figures 21.12-21.20 * | 1,2,7 | TECHNICAL FIELDS SEARCHED (Int. Cl.5 )

G06F |

-----

The present search report has been drawn up for all claims

| Place of search | Date of completion of the search | Examiner |
|---|---|---|
| THE HAGUE | 27 JULY 1992 | GORZEWSKI M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................
& : member of the same patent family, corresponding
    document

EPO FORM 1503 03.82 (P0401)